(19)

**Europäisches Patentamt**
**European Patent Office**
**Office européen des brevets**

(11) **EP 1 540 371 B1**

(12) **FASCICULE DE BREVET EUROPEEN**

(45) Date de publication et mention
de la délivrance du brevet:
**14.09.2011 Bulletin 2011/37**

(21) Numéro de dépôt: **03784201.0**

(22) Date de dépôt: **09.07.2003**

(51) Int Cl.:
*G01S 15/89* (2006.01)     *G01S 7/52* (2006.01)

(86) Numéro de dépôt international:
**PCT/EP2003/050297**

(87) Numéro de publication internationale:
**WO 2004/015447 (19.02.2004 Gazette 2004/08)**

(54) **ANTENNE SONAR SYNTHETIQUE**

SYNTHETISCHE SONARANTENNE

SYNTHETIC SONAR ANTENNA

(84) Etats contractants désignés:
**AT BE BG CH CY CZ DE DK EE ES FI FR GB GR HU IE IT LI LU MC NL PT RO SE SI SK TR**

(30) Priorité: **06.08.2002 FR 0209997**

(43) Date de publication de la demande:
**15.06.2005 Bulletin 2005/24**

(73) Titulaire: **Thales**
**92200 Neuilly Sur Seine (FR)**

(72) Inventeur: **BILLON, Didier,**
**Thales Intellectual Property**
**F-94117 Arcueil Cedex (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-99/18452**

• BILLON D ET AL: "Theoretical performance and experimental results for synthetic aperture sonar self-calibration" OCEANS '98 CONFERENCE PROCEEDINGS NICE, FRANCE 28 SEPT.-1 OCT. 1998, NEW YORK, NY, USA,IEEE, US, 28 septembre 1998 (1998-09-28), pages 965-970, XP010311671 ISBN: 0-7803-5045-6 cité dans la demande
• DOUGLAS B L ET AL: "SINGLE-REFERENCE CALIBRATION TECHNIQUE FOR MULTIPLE-ELEMENT ARRAY SONAR IMAGING SYSTEMS" JOURNAL OF THE ACOUSTICAL SOCIETY OF AMERICA, AMERICAN INSTITUTE OF PHYSICS. NEW YORK, US, vol. 100, no. 1, 1 juillet 1996 (1996-07-01), pages 400-407, XP000623722 ISSN: 0001-4966

EP 1 540 371 B1

**EP 1 540 371 B1**

**Description**

La présente invention se rapporte aux antennes sonars qui sont utilisées pour former une antenne synthétique et plus particulièrement à l'autocalibration d'une telle antenne synthétique.

Les antennes synthétiques sont bien connues, tant dans le domaine des radars que celui des sonars, et l'autocalibration de telles antennes est une technique elle-même connue, décrite en particulier dans un article de Didier Billon et Franck Fohanno publié dans les actes de "OCEAN 98" par IEE aux pages 965 à 970.

L'autocalibration d'une antenne synthétique basée sur la corrélation inter-récurrences consiste à estimer une longueur L d'un déplacement parallèle à l'antenne, un retard $\tau$ entre deux signaux corrélés, et une variation de gisement $\beta$ induite par la rotation de l'antenne, à partir de signaux de deux récurrences successives reçus sur deux intervalles temporels correspondant à un même intervalle de distance et suffisamment petits pour que ces paramètres puissent être supposés constants. La longueur L est la somme, d'une part, des longueurs des composantes parallèles à l'antenne du déplacement entre les deux instants d'émission et d'autre part, du déplacement entre deux instants de réception relatifs au centre de l'intervalle de distance considéré. Si $O\xi$ est l'axe de l'antenne orienté dans le sens du déplacement, l'autocalibration est basée sur la corrélation entre le signal reçu au point d'abscisse $\xi$ à la première récurrence et au point d'abscisse $\xi$- L à la deuxième récurrence.

La précision des estimées dépend notamment du nombre de couples ($\xi,\xi$ -L) d'abscisses sur l'antenne tel que le champ acoustique incident généré par la réverbération du fond de la mer ait des valeurs indépendantes aux abscisses $\xi$ comprises entre $\xi_1$+ L et $\xi_M$, $\xi_1$ et $\xi_M$ étant les abscisses des centres de phase des capteurs extrêmes de l'antenne.

Le nombre de valeurs indépendantes du champ acoustique le long de l'antenne de réception est égal au rapport entre la longueur de l'antenne $L_r$ et la longueur de corrélation du champ le long de l'antenne, laquelle est égale au rapport $\lambda/\Delta\theta$ de la longueur d'onde $\lambda$ et de la largeur en gisement $\Delta\theta$ du secteur d'émission.

Dans l'art connu, le pas entre les capteurs de l'antenne de réception doit être inférieur à cette longueur de corrélation du champ, le rapport entre les deux longueurs ayant en pratique une valeur de l'ordre de 1,5. Autrement dit, le nombre de capteurs doit être supérieur au nombre de valeurs indépendantes du champ incident le long de l'antenne dans le même rapport.

Ainsi augmenter le nombre de valeurs indépendantes du champ le long de l'antenne, implique dans l'art connu de réduire le pas entre capteurs, donc d'en augmenter le nombre. L'invention vise à obtenir le même effet avec une augmentation moindre que dans l'art antérieur.

L'invention propose dans sa réalisation préférée, une antenne sonar synthétique caractérisée, en ce que la géométrie de l'antenne de réception est optimisée de manière à minimiser le nombre de capteurs en fixant le pas imposé par la précision de l'autocalibration, à au moins une extrémité de l'antenne de réception.

D'autres particularités et avantages de l'invention apparaîtront clairement dans la description suivante, présentée à titre d'exemple non limitatif en regard des figures annexées qui représentent :

- la figure 1, le schéma de l'antenne de réception selon la réalisation préférée de l'invention et,
- la figure 2, le schéma de cette antenne selon une variante de réalisation de l'invention.

Dans la suite de la description, le terme "antenne" seul est relatif à une antenne de réception.

Pour maximiser le taux de couverture horaire du système sonar, il faut que la vitesse de la plate-forme soit proche de la limite supérieure imposée par le principe de l'antenne synthétique. Dans ce cas, la longueur L/2 du déplacement inter-récurrences mesuré parallèlement à l'antenne est proche de la longueur $L_r$ de l'antenne. Ainsi les extrémités avec lesquelles est faite la corrélation interrécurences, de longueur $L_r$ - L, comportent alors un nombre de capteurs insuffisant pour permettre une interpolation spatiale satisfaisante.

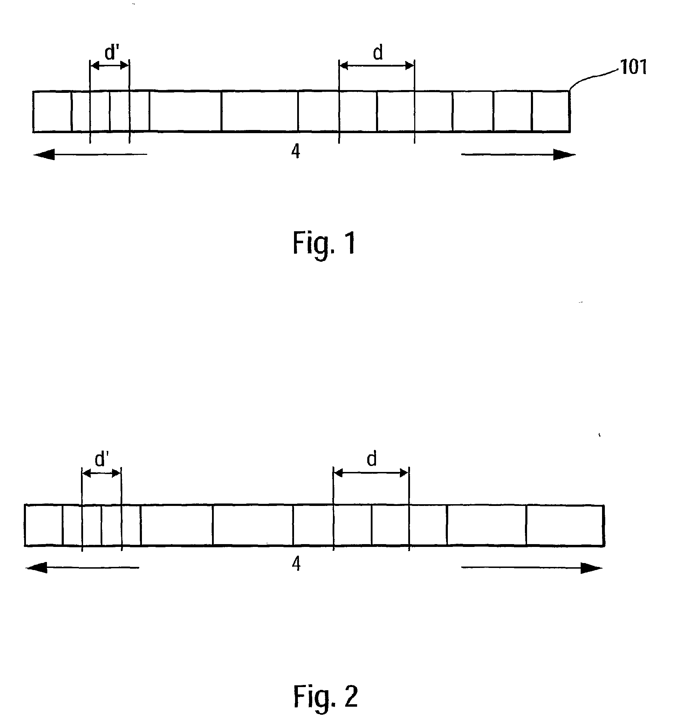

L'invention propose, comme représenté sur la figure 1, de réduire le pas aux deux extrémités de l'antenne 101, le reste de l'antenne conservant un pas qui est déterminé, comme dans l'art connu, par le niveau désiré du lobe image dans le diagramme de directivité d'une voie, ce qui conduit en pratique à fixer un pas par exemple de l'ordre de 0,7.$\lambda/\Delta\theta$ noté d.

Selon une variante, le pas n'est réduit qu'à une seule extrémité.

Le pas réduit étant noté d', soit N le nombre de capteurs au pas nominal de d et N' le nombre de capteurs au pas réduit d' (voir figure 1). Le nombre total de capteurs est alors M = N + N'. Pour qu'on puisse déterminer par interpolation au moins un couple de signaux (s($\xi$,t),s($\xi$-L,t+$T_r$)) constitué d'un signal d'une première récurrence et d'un signal d'une deuxième récurrence dont les centres de phase sont distants de L, le paramètre de l'autocalibration étant défini plus haut, il faut satisfaire l'inégalité :

$$L \leq \xi_M - \xi_1 \qquad (1)$$

La longueur de l'antenne étant fixée et donnée par l'expression $L_r = Nd + N'd'$ la relation (1) s'écrit de manière équivalente :

$$L \leq L_r - d \qquad (2)$$

si le pas y est constant comme dans l'art connu (N'= 0), ou bien,

$$L \leq L_r - \frac{d + d'}{2} \qquad (2')$$

si le pas est réduit à une seule des deux extrémités, ou bien encore,

$$L \leq L-d' \qquad (2'')$$

si le pas est réduit aux deux extrémités.

Ainsi, la longueur $L_r$ étant fixée, la limite sur L est plus grande que dans l'art connu si le pas est réduit à une extrémité, et plus grande encore si le pas est réduit aux deux extrémités. Cet avantage est acquis dès lors qu'à une extrémité à pas réduit, il y a au moins un capteur.

Lorsque d est très inférieur à $L_r$, la moindre limitation de L, donc de la vitesse de la plate-forme, ne constitue qu'un faible avantage relatif par rapport à l'art connu. Mais cette analyse ne tient pas compte de la qualité requise par l'interpolation spatiale de l'autocalibration de l'antenne synthétique.

Selon le gain de résolution désiré pour le traitement d'antenne synthétique, le pas d est déterminé classiquement en fonction de critères de qualité de directivité des voies formées. Or sa valeur s'avère généralement incompatible avec la précision d'autocalibration nécessaire.

Le procédé de l'invention permet dans ce cas une économie substantielle sur le nombre de capteurs de l'antenne, dans un rapport proche de celui du pas d déterminé classiquement et du pas d' fixé par la précision de l'autocalibration si les extrémités de l'antenne porteuses de la corrélation inter-récurrences ont une longueur très inférieure à la longueur totale de l'antenne. Ce cas peut notamment se représenter quand on exploite le procédé d'autocalibration décrit dans la demande de brevet publiée en France sous le n° 2 769 372. Il y est exposé un procédé permettant de réduire la longueur de ces extrémités tout en conservant une précision d'autocalibration suffisante grâce à la prise en compte dans le traitement de mesures gyrométriques.

La condition (1) n'est valable que si une interpolation linéaire est suffisante. Par exemple, si $\xi_1 < \xi_M - L < \xi_2$, l'interpolation est faite selon la formule :

$$s(\xi_M - L, t + T_r) = \frac{(\xi_2 - \xi_M + L)s(\xi_1, t + T_r) + (\xi_M - L - \xi_1)s(\xi_2, t + T_r)}{\xi_2 - \xi_1} \qquad (3)$$

Cette interpolation peut s'avérer insuffisamment précise dans le cas d'une antenne dont le pas constant d est déterminé, comme dans l'art antérieur, indépendamment de la contrainte liée à la précision de l'interpolation dans l'autocalibration. Si K est l'ordre de l'interpolation requise avec une telle antenne, K = 1 correspondant à une interpolation linéaire, K = 2 correspondant à une interpolation parabolique et ainsi de suite, il faut alors remplacer si K >2, la condition (2) par la condition plus strict $L \leq L_r - (K + 1)\dfrac{d}{2}$.

On peut choisir le pas réduit d' afin que l'interpolation linéaire (3) soit suffisante. Il suffit alors qu'il y ait 2 capteurs à pas réduit à l'une des deux extrémités. En Effet, au lieu d'interpoler les signaux des deux premiers capteurs de la deuxième récurrence, reçus à t+ $T_r$, pour déterminer le signal de centre de phase $\xi_M$- L, les signaux des deux derniers capteurs de la première récurrence, reçus à t, sont interpolés selon une formule analogue à (3) pour déterminer le signal de centre de phase $\xi_1$+ L.

De manière générale, la mise en oeuvre du procédé de l'invention n'implique pas que le pas soit réduit sur toute la longueur $L_r$- L d'une extrémité de l'antenne, l'intérêt du pas réduit pas rapport au pas nominal n'étant réel que pour les quelques capteurs d'extrémité, typiquement par exemple entre 1 et 4, afin de pallier la perte de précision de l'interpolation spatiale due aux effets de bord.

## Revendications

1. Antenne sonar synthétique **caractérisée en ce que** la géométrie de l'antenne de réception est optimisée de manière à minimiser le nombre de capteurs en fixant le pas imposé par la précision de l'autocalibration à au moins une extrémité de l'antenne de réception ; les capteurs étant agencés sur l'antenne de telle sorte que, à au moins une extrémité de l'antenne, le nombre de capteurs soit supérieur au nombre de capteurs dans la partie centrale, de façon à obtenir un pas plus fin de ces capteurs à cette extrémité.

2. Antenne selon la revendication 1, **caractérisée en ce que** les capteurs sont agencés sur l'antenne de telle sorte que le nombre de capteurs soit, à chaque extrémité de l'antenne, supérieur au nombre de capteurs dans la partie centrale, de façon à obtenir un pas plus fin de ces capteurs à ces extrémités.

## Claims

1. A synthetic sonar antenna, **characterised in that** the geometry of the receiving antenna is optimised so as to minimise the number of sensors by fixing the pitch imposed by the precision of the self-calibration at least at one end of the receiving antenna, said sensors being arranged on the antenna such that, on at least one end of the antenna, the number of sensors is greater than the number of sensors in the central section, so as to obtain a more precise pitch for these sensors at this end.

2. The antenna according to claim 1, **characterised in that** the sensors are arranged on the antenna such that the number of sensors, at each end of the antenna, is greater than the number of sensors in the central section, so as to obtain a more precise pitch for these sensors at these ends.

## Patentansprüche

1. Synthetische Sonarantenne, **dadurch gekennzeichnet, dass** die Geometrie der Empfangsantenne auf eine solche Weise optimiert wird, dass die Zahl der Sensoren durch Festlegen der durch die Präzision der Selbstkalibrierung auferlegten Teilung an wenigstens einem Ende der Empfangsantenne minimiert wird, wobei die Sensoren so auf der Antenne angeordnet sind, dass an wenigstens einem Ende der Antenne die Zahl der Sensoren größer ist als die Zahl der Sensoren im mittleren Teil, um eine feinere Teilung dieser Sensoren an diesem Ende zu erhalten.

2. Antenne nach Anspruch 1, **dadurch gekennzeichnet, dass** die Sensoren so auf der Antenne angeordnet sind, dass die Zahl der Sensoren an jedem Ende der Antenne größer ist als die Zahl der Sensoren im mittleren Teil, um eine feinere Teilung dieser Sensoren an diesen Enden zu erhalten.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2769372

**Littérature non-brevet citée dans la description**

- **DIDIER BILLON ; FRANCK FOHANNO.** *OCEAN 98,* 965-970